# FASCICULE DE BREVET EUROPEEN

(11) **EP 1 544 082 B1**
(45) Date de publication et mention de la délivrance du brevet: **20.09.2006**
(21) Numéro de dépôt: 04292654.3
(22) Date de dépôt: 09.11.2004
(51) Int. Cl.: B62D 25/08

(54) **Face avant de véhicule automobile comportant une serrure de capot**
Frontmodul für ein Kraftfahrzeug mit einem Haubenschloss
Front module of a motor vehicle comprising a bonnet catch

(30) Priorité: 16.12.2003 FR 0314746
(43) Date de publication de la demande: 22.06.2005
(73) Titulaire: Faurecia Bloc Avant, 92000 Nanterre (FR)
(72) Inventeur: Riviere, Caroline, 25700 Valentigney (FR); Berne, Sébastien, 25200 Montbeliard (FR)
(74) Mandataire: Hadjadj, Laurent

(56) Documents cités:
- EP-B- 1 030 800
- DE-A- 19 827 066
- FR-A- 2 783 794
- FR-A- 2 796 031
- US-A- 4 456 289

## Description

La présente invention concerne une face avant de véhicule automobile, comprenant :
- une façade structurelle ;
- une serrure de capot fixée sur ladite façade, et destinée à assurer le verrouillage, en position fermée, du capot avant du véhicule sur la face avant ; et
- une platine de support solidaire de la façade, et sur laquelle est fixée la serrure.

On connaît dans l'état de la technique, par exemple par le document FR 2 838 094, des faces avant dé ce type, dans lesquelles la platine est formée d'un seul tenant avec la traverse supérieure de la façade.

Le document US 4 456 289 A décrit une face avant conforme au préambule de la revendication 1.

Un problème important rencontré avec les agencements connus consiste à prévoir plusieurs implantations différentes de la serrure. En effet, partant d'une façade structurelle de configuration déterminée, l'implantation d'une serrure dans une région différente de celle prévue initialement à cet effet sur la façade, par exemple pour convenir à un autre modèle de véhicule, nécessite de modifier la façade elle-même. La façade étant une pièce de grande complexité de forme, le changement d'implantation de la serrure implique des modifications lourdes des outillages de fabrication de la façade.

L'invention a pour objet de remédier à ces inconvénients, et de proposer un agencement de face avant qui procure un haut degré de standardisation de la façade structurelle, et ce pour un grand nombre de choix d'emplacement de la serrure sur la face avant.

Ce but est atteint par l'invention, du fait que, dans une face avant conforme à l'invention qui a pour objet une face avant conforme à la revendication 1..

Ainsi, pour deux versions de face avant, dans lesquelles seule diffère l'implantation de la serrure, il est seulement nécessaire de prévoir des versions différentes de la platine.

D'autres caractéristiques, optionnelles, de l'invention sont énoncées dans les revendications secondaires 2 à 9.

Des modes particuliers de réalisation de l'invention vont maintenant être décrits en référence aux dessins annexés, sur lesquels :
- la Figure 1 est une vue en perspective arrière de la façade structurelle d'une face avant de véhicule automobile conforme à l'invention ;
- la Figure 2 représente un agencement de face avant de type connu, dans lequel une serrure de capot est montée sur la façade structurelle de la Figure 1 ;
- la Figure 3 est une vue en perspective d'une platine de support pour une face avant conforme à l'invention ;
- la Figure 4 est une vue en perspective avant d'une face avant conforme à l'invention, qui comprend la platine représentée à la Figure 3 ;
- la Figure 5 est une vue en perspective arrière de la face avant de la Figure 4 ; et
- la Figure 6 est une vue analogue à la Figure 3 d'une platine de support selon une deuxième forme de réalisation.

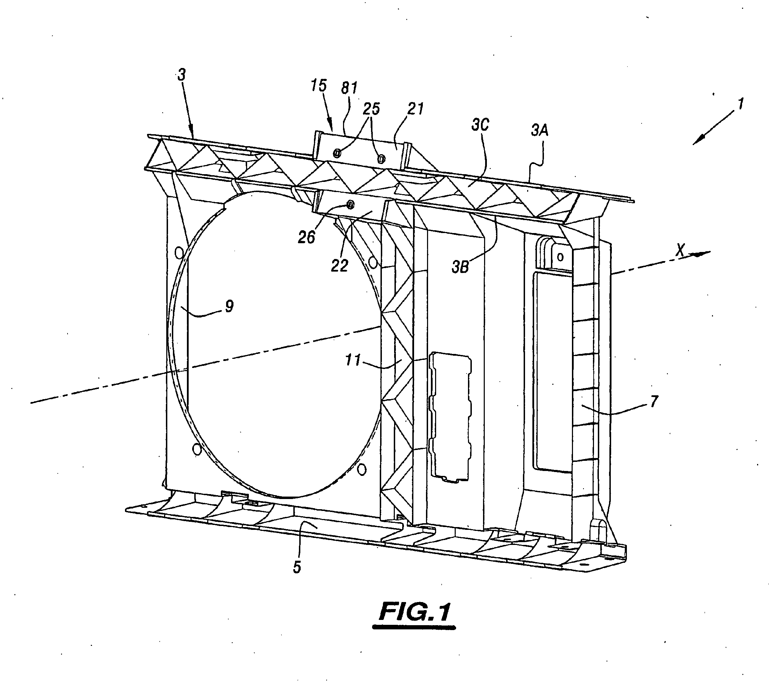

Sur la Figure 1, on a représenté en perspective la façade structurelle 1 d'une face avant de véhicule automobile.

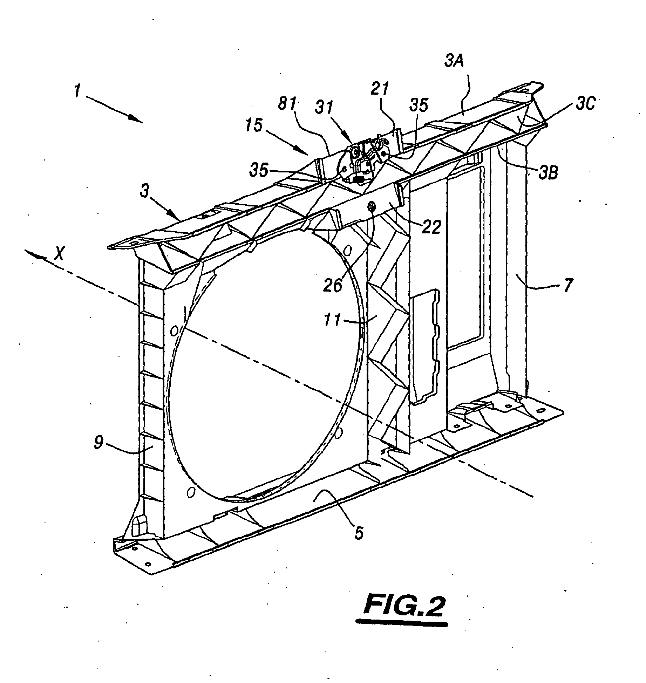

La Figure 1, ainsi que les Figures 2, 4, et 5, ont été orientées selon l'axe X, qui représente l'axe longitudinal du véhicule, dirigé d'arrière en avant (c'est-à-dire dans le sens de marche avant du véhicule) et supposé horizontal. La façade 1 est supposée être dans son orientation de montage sur le véhicule.

La façade structurelle 1 est, dans l'exemple représenté, de constitution hybride, c'est-à-dire réalisée partiellement en métal, et partiellement en matière plastique. Cependant, l'invention n'est naturellement pas limitée à une telle constitution de façade.

La façade structurelle 1 représentée a une forme générale sensiblement parallélépipédique, dont le plan moyen est sensiblement vertical, et qui présente une face géométrique principale avant et une face géométrique principale arrière.

La façade structurelle 1 comporte une poutre horizontale supérieure 3 définissant le côté supérieur de la façade, qui s'étend transversalement par rapport à l'axe X. Cette poutre 3 est de conception hybride, en ce qu'elle présente extérieurement des parois métalliques 3A, 3B, entre lesquelles sont formées des nervures 3C en matière plastique surmoulée.

La façade structurelle 1 comporte en outre une poutre inférieure 5 définissant le côté inférieur de la forme rectangulaire de la façade, ainsi que des montants latéraux, droit 7 et gauche 9, qui relient entre elles les poutres supérieure 3 et inférieure 5.

La façade structurelle 1 est en outre pourvue d'un montant central 11, également de conception hybride.

La façade structurelle 1 est prévue d'une part pour être fixée rigidement à d'autres éléments structurels du véhicule, tels que des longerons, et d'autre part pour constituer un support d'éléments de carrosserie ou d'équipements fonctionnels, tels que des blocs optiques, des éléments de circuit de refroidissement (radiateur, groupe motoventilateur, ...) etc.

En particulier, la façade structurelle 1 est prévue pour supporter une serrure de capot, destinée à assurer le verrouillage en position fermée du capot avant, à savoir, pour les véhicules les plus courants, le capot du compartiment moteur.

A cet effet, la façade structurelle 1 présente une région 15 de fixation de la serrure de capot, au niveau de la poutre supérieure 3.

Dans l'exemple représenté, la région de fixation 15 est définie par deux plaquettes 21, 22 formées chacune d'une partie de la paroi métallique 3A d'une part, et d'une partie de la paroi métallique 3B d'autre part. Les plaquettes 21, 22 s'étendent sensiblement dans un même plan quasiment vertical, et font saillie vers l'extérieur de la poutre supérieure 3.

Les plaquettes 21, 22 sont pourvues de trous de fixation, dont deux 25 sont ménagés dans la plaquette supérieure 21, et un 26 est ménagé dans la plaquette inférieure 22. Ces trous de fixation 25, 26 sont accessibles (pour un rivet, une vis, ou tout autre organe complémentaire de fixation) depuis la face arrière des plaquettes 21, 22, laquelle affleure à la face arrière de la poutre supérieure 3.

Les trous 25, 26 peuvent être de tout type adapté pour une fixation précise et fiable de la serrure ou d'une pièce d'interface telle que décrite plus loin. En particulier, les trous 25, 26 peuvent être lisses ou taraudés, circulaires ou oblongs, en fonction du mode de fixation choisi.

Sur la Figure 2, on a représenté un agencement de face avant de type connu, dans lequel une serrure de capot 31 est fixée rigidement à la façade 1 dans la région 15 de fixation de la serrure, et ce par une liaison directe de cette dernière aux plaquettes 21, 22. Par liaison directe, on entend que la serrure 31 est montée sur les plaquettes 21, 22 sans pièce d'interface rapportée, interposée entre la serrure et les plaquettes.

Dans l'exemple représenté, la serrure 31 est munie de seulement deux trous de fixation 35, correspondant aux trous 25 de la plaquette 21. Ainsi, la serrure 31 est fixée à la plaquette supérieure 21, par exemple par vissage ou rivetage, au niveau des deux points de fixation 25. Dans cet exemple, le trou de fixation 26 de la plaquette inférieure 22 est laissé libre, étant entendu que d'autres types de serrure pourraient être montés sur la façade structurelle 1, notamment des serrures à trois points de fixation qui nécessiteraient l'utilisation du trou 26.

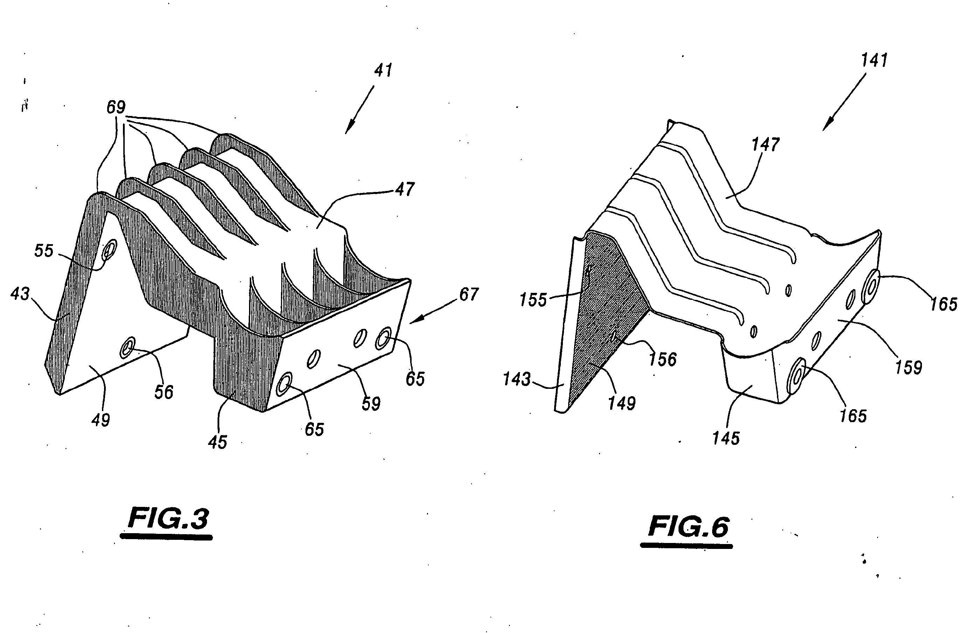

Sur la Figure 3, on a représenté, à plus grande échelle, une platine de support 41 telle qu'utilisée dans une face avant conforme à l'invention, pour déporter la région de fixation de la serrure par rapport à la région 15 définie par les plaquettes 21, 22, elles-mêmes issues de la façade de structurelle 1.

Cette platine 41, dans la forme de réalisation illustrée à la Figure 3, est constituée essentiellement d'une pièce en matière plastique moulée, qui a la forme générale d'un étrier. La platine 41 présente en effet deux branches latérales 43, 45 reliées par une branche centrale ou pontet 47.

La première branche 43 est formée comme une plaque, dont la face interne 49, c'est-à-dire celle tournée vers l'autre branche 45, est sensiblement plane. La plaque 43 est de forme adaptée pour s'ajuster à la région de fixation 15 de la façade 1, dans une position où la face interne 49 est en appui plan sur les plaquettes 21, 22. La plaquette 43 est pourvue de trois trous de fixation 55, 56 (dont deux seulement sont visibles sur la Figure 3) correspondant aux trous de fixation 25, 26 des plaquettes 21, 22. Par le terme « correspondant », on entend que ces trois trous de fixation ont la même position relative que ceux des plaquettes 21, 22, et qu'ils peuvent recevoir les mêmes organes mâles de fixation (vis, rivets,...) pour solidarisation des deux pièces.

Ainsi, la platine 41 peut être montée et fixée sur la façade structurelle 1 au niveau de la région de fixation 15, par des moyens analogues, c'est-à-dire par exemple par vissage ou rivetage, à ceux utilisés pour fixer la serrure 31 directement sur la façade 1.

La deuxième branche 45 est formée comme un bloc d'épaisseur supérieure à celle de la plaque 43, qui a une face externe 59 sensiblement plane.

Dans l'exemple représenté, la plaque 43 et le bloc 45 ont des plans médians sensiblement parallèles, et les faces interne 49 et externe 59 sont sensiblement parallèles.

Le bloc 45 est formé avec deux trous 65 de fixation de la serrure 31, qui correspondent aux trous 35 de la serrure. Les trous 65 ont un positionnement relatif identique au positionnement relatif des trous 55, et ont un diamètre identique. Ils sont également de même type, c'est-à-dire qu'ils peuvent recevoir les mêmes organes mâles de fixation, qu'ils soient par exemple lisses ou filetés. Ainsi, la serrure 31 peut être montée et fixée, notamment par vissage ou rivetage, sur le bloc 45, dont la face externe 59 définit la région 67 de fixation de la serrure, de la même façon qu'elle peut être montée et fixée sur les plaquettes 21, 22 en l'absence de platine (comme illustré sur la Figure 2).

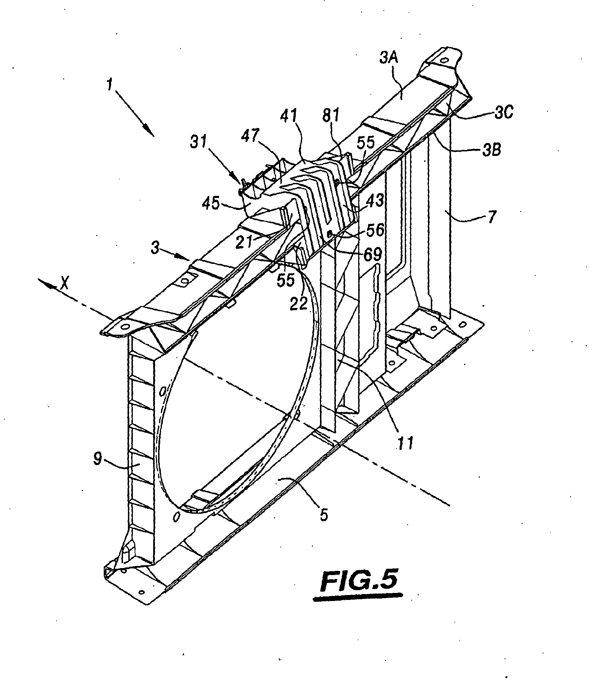

On notera que la platine 41 est formée avec une série de nervures 69 parallèles entre elles, et orientées d'une branche vers l'autre 43, 45 (voir également Figure 5). Ces nervures de rigidification de la platine s'étendent extérieurement sur la première branche 43, et sur le pontet 47.

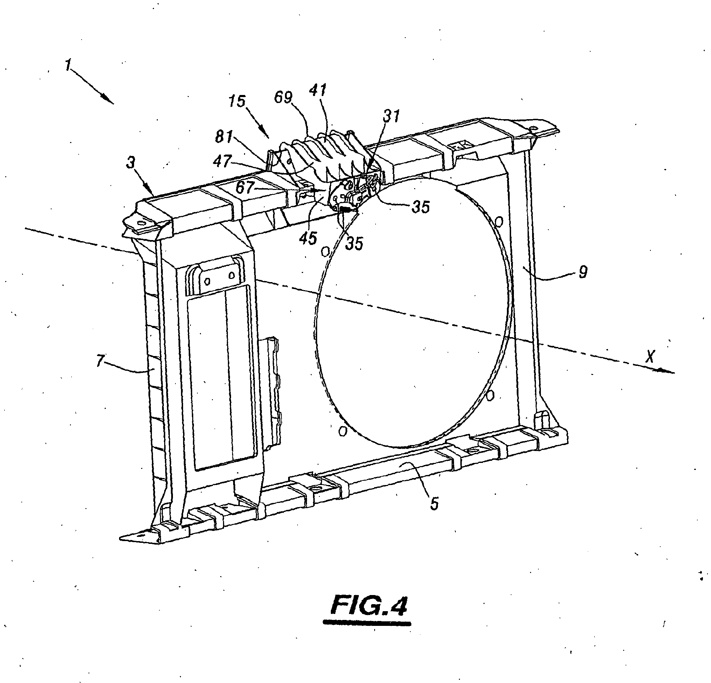

Sur les Figures 4 et 5, auxquelles on se réfère à présent, on a représenté partiellement une face avant de véhicule automobile conforme à l'invention, qui comprend une façade 1 du type illustré sur la Figure 1, une serrure 31, par exemple du type représenté à la Figure 2. Cette dernière est montée sur la façade 1 par l'intermédiaire de la platine 41 représentée sur la Figure 3.

Sur ces Figures, on a illustré le fait que la platine 41 est rapportée et fixée, par exemple par vissage ou rivetage sur la façade 1, au niveau de la région de fixation 15, la serrure 31 étant fixée de façon analogue sur la platine 41, au niveau de la région de fixation 67.

Dans l'exemple représenté, la platine 41 est fixée en trois points, au niveau des trois trous 55, 56 aux plaquettes 21, 22 de la façade structurelle 1.

Lorsqu'elle est fixée sur la façade 1, comme cela a été représenté sur les Figures 4 et 5, la platine 41 s'étend d'une face principale à l'autre de la façade 1, de part et d'autre du plan médian vertical de cette dernière. La première branche 43 s'étend essentiellement du côté arrière de la façade 1, tandis que la deuxième branche 45 s'étend essentiellement du côté avant. Ainsi, par rapport à la position nominale de la serrure 31, lorsque cette dernière est montée dans la région de fixation 15 (tel que représenté sur la Figure 2), la serrure 31 est déportée vers l'avant de la façade structurelle 1, dans le cas de l'agencement conforme à l'invention (Figures 4 et 5).

On notera également que dans la configuration de montage de la platine 41 sur la façade 1, le pontet 47 prend appui, par une partie interne, sur un bord supérieur 81 de la façade 1, constitué d'un bord supérieur de la plaquette 21.

On conçoit que la platine 41 permet ainsi, sans modification (en tout cas sans modification importante) de la façade structurelle 1, de déporter la position de la serrure 31 par rapport à l'emplacement 15 prévu par défaut sur la façade structurelle 1 elle-même.

Dans une deuxième forme de réalisation représentée sur la Figure 6, la platine est réalisée, de préférence d'une seule pièce, en métal.

En particulier, la platine 141 de la Figure 6 est réalisée à partir d'une feuille métallique découpée et pliée de façon à prendre la forme d'un étrier, qui présente une première branche latérale 143, une deuxième branche latérale 145, et un pontet 147 reliant les deux branches entre elles.

De façon analogue à ce qui a été décrit pour la platine 41 en référence à la Figure 3, la première branche 143 présente une face interne 149 et trois trous de fixation 155, 156, et la deuxième branche 145 présente une face externe 159 et deux trous de fixation 165. La fixation de la platine 141 s'effectue, sur la façade structurelle 1, de façon analogue à ce qui a été décrit pour la Figure 3.

Bien que l'on ait décrit l'invention avec des modes de fixation particuliers de la platine sur la façade d'une part, et de la serrure sur la platine d'autre part, d'autres modes de fixation conviennent à la mise en oeuvre de l'invention.

De la même façon, on a décrit des modes de réalisation préférés de l'invention, dans lesquels la platine permet de déporter la serrure d'une face à une autre, dans la direction longitudinale, entre une position « initiale » et une position « déportée » parallèle et orientée de la même façon. Cela ne limite pas le cadre de l'invention à une telle transposition de la serrure. On pourrait prévoir au contraire des platines de types différents, adaptées pour orienter la serrure de façon différente et/ou pour réaliser un déport dans des directions différentes, notamment dans le sens transversal.

## Revendications

1. Face avant de véhicule automobile, comprenant :
- une façade structurelle (1);
- une serrure de capot (31) fixée sur ladite façade, et destinée à assurer le verrouillage, en position fermée, du capot avant du véhicule sur la face avant ; et
- une platine de support (41; 141) rapportée et fixée sur la façade (1) par des premiers moyens de fixation (25, 26, 55 ; 155, 56 ; 156), et sur laquelle est fixée la serrure (31) par des deuxièmes moyens de fixation (35, 65; 165) distincts des premiers moyens de fixation,
**caractérisée en ce que** lesdits moyens de fixation (25, 26, 35, 55 ; 155, 56 ; 156, 65 ; 165) sont adaptés pour permettre la fixation de la serrure (31) sur la façade (1) en l'absence de la platine (41 ; 141).

2. Face avant suivant la revendication 1, **caractérisée en ce que** les premiers moyens de fixation (25, 26, 55 ; 155, 56 ; 156) comprennent un premier ensemble d'au moins deux organes de fixation (25) prévus dans la façade (1), et les deuxièmes moyens de fixation (35, 65; 165) comprennent un deuxième ensemble d'au moins deux organes de fixation (65; 165) prévus dans la platine (41; 141), les organes (65; 165) du deuxième ensemble étant distincts de ceux (25) du premier ensemble, espacés entre eux d'une même distance, et de même type que ceux (25) du premier ensemble.

3. Face avant suivant la revendication 1 ou 2, **caractérisée en ce que** la façade (1) comporte une région (15) sensiblement plane de fixation de la platine (41 ; 141), ladite région plane (15) étant pourvue d'organes (25, 26) de fixation de la platine (41 ; 141) sur la façade (1) et tournée du côté de l'une des faces principales de la façade (1), et la platine (41; 141) comporte une région (59; 159) sensiblement plane de fixation de la serrure (31), ladite région (59; 159) plane étant pourvue d'organes (65; 165) de fixation de la serrure (31) sur la platine (41; 141) et tournée du côté de l'autre des faces principales de la façade (1).

4. Face avant suivant la revendication 3, **caractérisée en ce que** la platine (41; 141) a la forme générale d'un étrier, qui a une première branche (43; 143) avec une face sensiblement plane (49; 149) de fixation à la façade (1), et une deuxième branche (45; 145) avec une face sensiblement plane (59; 159) de fixation de la serrure (31), les deux branches étant reliées par un pontet (47; 147), et s'étendant de part et d'autre de la façade (1) lorsque la platine (41; 141) est montée sur cette dernière.

5. Face avant suivant la revendication 4, **caractérisée en ce que** le pontet (47; 147) prend appui sur un bord supérieur (81) de la façade (1), lorsque la platine (41; 141) est montée sur cette dernière.

6. Face avant suivant l'une quelconque des revendications 1 à 5, **caractérisée en ce que** la platine (41; 141) est réalisée d'une seule pièce.

7. Face avant suivant l'une quelconque des revendications 1 à 6, **caractérisée en ce que** la platine (41) est réalisée en matière plastique.

8. Face avant suivant les revendications 3 et 7 prises ensemble, **caractérisée en ce que** la platine (41) comporte des nervures de rigidification (69) orientées d'une branche (43) vers l'autre (45).

9. Face avant suivant l'une quelconque des revendications 1 à 6, **caractérisée en ce que** la platine (141) est réalisée en métal.

## Claims

1. Front face of an automobile, comprising:
- a structural facade (1);
- a bonnet lock (31) fixed to said facade and intended to ensure the locking, in the closed position, of the front bonnet of the vehicle on the front face; and
- a support plate (41; 141) joined to and fixed on the facade (1) by first securing means (25, 26, 55; 155, 56; 156) and on which is fixed the lock (31) by second securing means (35, 65; 165), distinct from the first securing means, **characterised in that** said securing means (25, 26, 35, 55; 155, 56; 156, 65; 165) are adapted so as to allow for the securing of the lock (31) on the facade (1) in the absence of the plate (41; 141).

2. Front face according to Claim 1, **characterised in that** the first securing means (25, 26, 55; 155, 56; 156) comprise a first assembly of at least two securing elements (25) provided in the facade (1) and the second securing means (35, 65; 165) comprise a second assembly of at least two securing elements (65; 165) provided in the plate (41; 141), the elements (65; 165) of the second assembly being distinct from those (25) of the first assembly, spaced at the same distance between them, and of the same type as those (25) of the first assembly.

3. Front face according to Claim 1 or 2, **characterised in that** the facade (1) comprises an essentially flat area (15) for securing the plate (41; 141), said flat area (15) being provided with elements (25, 26) for securing the plate (41; 141) on the facade (1) and turned away from the side of one of the main faces of the facade (1), and the plate (41; 141) comprises an essentially flat area (59; 159) for securing the lock (31), said flat area (59; 159) being provided with elements (65; 165) for securing the lock (31) on the plate (41; 141) and turned away from the side of the other of the main faces of the facade (1).

4. Front face according to Claim 3, **characterised in that** the plate (41; 141) has the general shape of a calliper, which has a first limb (43; 143) with an essentially flat face (49; 149) for securing to the facade (1), and a second limb (45; 145) with an essentially flat face (59; 159) for securing the lock (31), the two limbs being connected by a bridging element (47; 147) and extending on both sides of the facade (1) when the plate (41; 141) is mounted on the latter.

5. Front face according to Claim 4, **characterised in that** the bridging element (47; 147) is supported on an upper edge (81) of the facade (1) when the plate (41; 141) is mounted on the latter.

6. Front face according to any one of the Claims 1 to 5, **characterised in that** the plate (41; 141) is made of one single piece.

7. Front face according to any one of the Claims 1 to 6, **characterised in that** the plate (41) is made of plastic material.

8. Front face according to Claims 3 and 7 taken together, **characterised in that** the plate (41) comprises two bracing ribs (69) oriented from one limb (43) towards the other (45).

9. Front face according to any one of the Claims 1 to 6, **characterised in that** the plate (141) is made of metal.

## Patentansprüche

1. Kraftfahrzeug-Vorderseite, die umfasst:
- eine Strukturfront (1);
- eine Haubenverriegelung (31), die an der Front befestigt und dazu bestimmt ist, die Verriegelung der Vorderhaube des Fahrzeugs an der Vorderseite in ihrer geschlossenen Position zu gewährleisten; und
- eine Tragplatte (41; 141), die mit der Front (1) verbunden und daran durch erste Befestigungsmittel (25, 26, 55; 155, 56; 156) befestigt ist und an der das Schloss (31) durch zweite Befestigungsmittel (35, 65; 165), die von den ersten Befestigungsmitteln verschieden sind, befestigt ist, **dadurch gekennzeichnet, dass** die Befestigungsmittel (25, 26, 35, 55; 155, 56; 156, 65; 165) so beschaffen sind, dass sie die Befestigung des Schlosses (31) an der Front (1) bei nicht vorhandener Platte (41; 141) ermöglichen.

2. Vorderseite nach Anspruch 1, **dadurch gekennzeichnet, dass** die ersten Befestigungsmittel (25, 26, 55; 155, 56; 156) eine erste Baugruppe aus wenigstens zwei Befestigungsorganen (25), die in der Front (1) vorgesehen sind, umfassen und die zweiten Befestigungsmittel (35, 65; 165) eine zweite Baugruppe aus wenigstens zwei Befestigungsorganen (65; 165), die in der Platte (41; 141) vorgesehen sind, umfassen, wobei die Organe (65; 165) der zweiten Baugruppe von jenen (25) der ersten Baugruppe verschieden sind und voneinander um dieselbe Strecke beabstandet sind und vom selben Typ wie jene (25) der ersten Baugruppe sind.

3. Vorderseite nach Anspruch 1 oder 2, **dadurch gekennzeichnet, dass** die Front (1) einen im Wesentlichen ebenen Bereich (15) für die Befestigung der Tragplatte (41; 141) umfasst, wobei der ebene Bereich (15) mit Organen (25, 26) für die Befestigung der Tragplatte (41; 141) an der Front (1) versehen ist und zu einer der Hauptseiten der Front (1) gerichtet ist, und die Tragplatte (41; 141) einen im Wesentlichen ebenen Bereich (59; 159) für die Befestigung des Schlosses (31) aufweist, wobei dieser ebene Bereich (59; 159) mit Organen (65; 165) für die Befestigung des Schlosses (31) an der Platte (41; 141) versehen ist und zu der anderen der Hauptseiten der Front (1) gerichtet ist.

4. Vorderseite nach Anspruch 3, **dadurch gekennzeichnet, dass** die Platte (41; 141) die allgemeine Form eines Bügels hat, der einen ersten Schenkel (43; 143) mit einer im Wesentlichen ebenen Seite (49; 149) für die Befestigung an der Front (1) und einen zweiten Schenkel (45; 145) mit einer im Wesentlichen ebenen Seite (59; 159) für die Befestigung des Schlosses (31) besitzt, wobei die zwei Schenkel durch einen Steg (47; 147) verbunden sind und sich beiderseits der Front (1) erstrecken, wenn die Platte (41; 141) an dieser letzteren angebracht ist.

5. Vorderseite nach Anspruch 4, **dadurch gekennzeichnet, dass** sich der Steg (47; 147) an einem oberen Rand (81) der Front (1) abstützt, wenn die Platte (41; 141) an dieser letzteren angebracht ist.

6. Vorderseite nach einem der Ansprüche 1 bis 5, **dadurch gekennzeichnet, dass** die Platte (41; 141) einteilig verwirklicht ist.

7. Vorderseite nach einem der Ansprüche 1 bis 6, **dadurch gekennzeichnet, dass** die Platte (41) aus Kunststoff verwirklicht ist.

8. Vorderseite nach der Gesamtheit der Ansprüche 3 und 7, **dadurch gekennzeichnet, dass** die Platte (41) Versteifungsrippen (69) aufweist, die von einem Schenkel (43) zum anderen (45) gerichtet sind.

9. Vorderseite nach einem der Ansprüche 1 bis 6, **dadurch gekennzeichnet, dass** die Platte (141) aus Metall verwirklicht ist.
